(19) Europäisches Patentamt
European Patent Office
Office européen des brevets

(11) **EP 1 126 237 B1**

(12) **EUROPÄISCHE PATENTSCHRIFT**

(45) Veröffentlichungstag und Bekanntmachung des Hinweises auf die Patenterteilung:
**21.10.2009 Patentblatt 2009/43**

(51) Int Cl.:
**G01B 21/04** *(2006.01)*     **G01B 5/012** *(2006.01)*

(21) Anmeldenummer: **01100780.4**

(22) Anmeldetag: **13.01.2001**

(54) **Verfahren zur Korrektur einer Dreh-Schwenkeinrichtung für den Tastkopf eines Koordinatenmessgerätes**

Method for correcting a rotating and pivoting device for the touch probe of a coordinate measuring machine

Méthode pour corriger un dispositif de rotation et pivotement pour la sonde de contact d' un appareil de mesure des coordonnées

(84) Benannte Vertragsstaaten:
**DE FR GB IT**

(30) Priorität: **15.02.2000 DE 10006753**

(43) Veröffentlichungstag der Anmeldung:
**22.08.2001 Patentblatt 2001/34**

(60) Teilanmeldung:
**05023716.3 / 1 624 282**

(73) Patentinhaber: **Carl Zeiss Industrielle Messtechnik GmbH 73447 Oberkochen (DE)**

(72) Erfinder:
• **Lotze, Werner, Prof.**
  **01309 Dresden (DE)**
• **Held, Tobias**
  **73430 Aalen (DE)**

(74) Vertreter: **Henckell, Carsten Carl Zeiss Patentabteilung 73446 Oberkochen (DE)**

(56) Entgegenhaltungen:
**DE-A- 4 001 433**

**Beschreibung**

Die Erfindung betrifft ein Verfahren zur Korrektur einer Dreh-Schwenkeinrichtung für den Tastkopf eines Koordinatenmeßgerätes, mit wenigstens zwei Drehgelenken zur winkelmäßigen Ausrichtung der Tastköpfe.

Dreh-Schwenkeinrichtungen sind bereits seit längerem bekannt. Es gibt hierbei einerseits die sogenannten kontinuierlich verdrehbaren Dreh-Schwenkeinrichtungen, bei denen sich der Drehwinkel kontinuierlich über einen entsprechenden Motor verstellen läßt und der exakte Drehwinkel durch einen Encoder geliefert wird, sowie die sogenannten rastenden Dreh-Schwenkeinrichtungen, bei denen nur eine begrenzte Anzahl von Drehwinkeln eingestellt werden können. In einer von der Anmelderin vertriebenen rastenden Dreh-Schwenkeinrichtung mit der Typenbezeichnung "RDS" werden hierzu zwei zusammenwirkende Zahnkränze einer sogenannten Hirth-Verzahnung verwendet, die im verriegelten Zustand ineinandergreifen und hierdurch den jeweils eingestellten Drehwinkel verriegeln.

Eine kontinuierlich verdrehbare Dreh-Schwenkeinrichtung ist in der DE 37 400 70 A1 und dem hierzu korrespondierenden US-Patent 4,888,877 offenbart. Hierin ist eine Dreh-Schwenkeinrichtung gezeigt, welche zwei motorisch betriebene, kontinuierlich verschwenkbare Drehgelenke aufweist, deren Drehachsen senkrecht aufeinander stehen. Damit der Taststift nicht bei jeder Änderung des Drehwinkels der Drehgelenke neu kalibriert werden muß, sind bezüglich der unterschiedlichen Drehwinkel Korrekturwerte abgelegt, die die Lage der Drehachsen zueinander beschreiben. Außerdem können alternativ oder zusätzlich auch Korrekturwerte hinsichtlich Winkelpositionsabweichungen und der Laufabweichungen der Drehachsen vorgesehen sein, wobei hinsichtlich der Realisierung dieser letztgenannten Korrektur nicht genau beschrieben ist, wie diese besonders vorteilhaft eingesetzt werden kann.

Die Besonderheit der in der DE 37 400 70 A1 gezeigten Dreh-Schwenkeinheit ist hierbei darin zu sehen, daß für jeden der einzelnen Fehler ein separates Korrekturmodell erforderlich ist, so daß einerseits für mehrere Korrekturmodelle die Fehlerparameter bestimmt werden müssen, sowie bei der Korrektur der gemessenen Meßwerte mehrere Korrekturrechnungen durchgeführt werden müssen. Dies hat in der Vergangenheit dazu geführt, daß aufgrund der hohen Anforderungen an eine geringe Meßzeit nur die Lage der Drehachsen zueinander und die Winkelpositionsabweichungen der Drehgelenke korrigiert wurden. Diese Korrekturen waren jedoch nur für kontinuierlich verdrehbare Dreh-Schwenkeinrichtungen anwendbar, wie sie in der DE 37 400 70 A1 gezeigt sind. Für rastende Dreh-Schwenkeinrichtungen, bei denen die Dreh-Schwenkeinrichtung in einer Vielzahl von unterschiedlichen Stellungen eingerastet werden kann, waren die Korrekturmodelle nur unzureichend. Auch für kontinuierlich drehbare Dreh-Schwenkeinrichtungen ist es grundsätzlich wünschenswert die Meßgenauigkeit weiter zu verbessern.

Die Deutsche Offenlegungsschrift DE 40 01 433 A1 und das dazu korrespondierende US-Patent 5,138,563 zeigen ein Korrekturverfahren für Dreh-Schwenkeinrichtungen, bei denen Fehler korrigiert werden, die sich aufgrund der elastischen Verformung der Dreh-Schwenkeinrichtung und der Tastkonfiguration ergeben, insbesondere dann, wenn die Tastkonfiguration eine Tastkopfverlängerung umfaßt, von der der Tastkopf gehalten wird. Dazu wurde das in der oben bereits zitierten DE 37 400 70 A1 beschriebene Verfahren zur Korrektur der Lage der Drehachsen um einen Term $\vec{B}(\alpha,\beta)$ erweitert, der die Verformung angibt. Die Dreh-Schwenkeinrichtung mit der daran befestigten Tastkonfiguration wurde hierbei nach dem Modell eines Biegebalkens betrachtet, so daß zur Bestimmung des $\vec{B}(\alpha,\beta)$ Terms die maximale Durchbiegung der Dreh-Schwenkeinrichtung bestimmt wurde und in Abhängigkeit von der jeweiligen Winkelstellung der Drehgelenke dann auf die entsprechende Durchbiegung interpoliert wurde. Das Modell hat in der Vergangenheit hervorragende Dienste geleistet. Aufgrund der stetig höher werdenden Anforderungen an die Meßgenauigkeit von Koordinatenmeßgeräten, wurde der Versuch unternommen die in DE 40 01 433 A1 mit Bezugszeichen 5 bezeichnete Tastkopfverlängerung steifer zu gestalten. Hierbei stellte sich jedoch heraus, daß die Korrekturergebnisse nicht, wie erwartet, besser wurden, weil hierdurch die in der Dreh-Schwenkeinrichtung auftretenden Verformungen größer wurden, als die Verformungen in der Tastkopfverlängerung und deshalb das zugrundeliegende Modell eines Biegebalkens nicht mehr funktionierte.

Die Europäische Veröffentlichungsschrift EP 07 59 534 A2 zeigt ein Verfahren um kontinuierlich verdrehbare Dreh-Schwenkeinrichtungen oder rastende Dreh-Schwenkeinrichtungen zu korrigieren. Hierin wird vorgeschlagen die Dreh-Schwenkeinrichtung in zwei unterschiedliche Drehwinkel zu bringen und hier jeweils zu kalibrieren. Ein dritter, zwischen den Drehwinkeln liegender Drehwinkel wird dann korrigiert, indem zwischen den aufgenommenen Kalibrierdaten interpoliert wird. Hinsichtlich des Korrekturmodells wird hier nichts näher ausgeführt.

Aufgabe der vorliegenden Erfindung ist es ein Verfahren zur Korrektur einer Dreh-Schwenkeinrichtung anzugeben, mit der die durch die Tastkonfiguration hervorgerufenen Verbiegungen einer Dreh-Schwenkeinrichtung verbessert korrigiert werden können.

Die Aufgabe wird durch die Merkmale des unabhängigen Anspruches 1 gelöst. Der lösungsgemäße Grundgedanke ist hierbei darin zu sehen, daß zur Korrektur der elastischen Verformung in der hierfür vorgesehenen Korrektureinheit ein mathematisches Modell verwendet wird, das wenigstens zwei Finite Elemente umfasst, wobei bei dem in der Korrektureinheit verwendeten mathematischen Modell jedes des Finiten Elemente jeweils einer Drehachse eines der Drehgelenke zugeordnet ist. Hierdurch ergibt sich der besondere Vorteil, daß durch diese Maßnahme die Meßergebnisse genauer werden. Insbesondere arbeitet ein solches Korrekturmodell auch dann noch präzise, wenn die in der Dreh-Schwenkeinrichtung auftretenden Verformungen größer sind als die in der Tastkopfverlängerung, sodaß nunmehr durch die Verwendung von steifen Tastkopfverlängerungen eine weitere Verringerung der Meßungenauigkeit erzielt werden kann.

Die Korrektureinheit ist hierbei ein Rechner oder ein Mikroprozessor, in dem die entsprechend aufgenommenen Korrekturwerte abgespeichert werden und der entsprechend dem gewählten mathematischen Modell die gemessenen Meßwerte korrigiert.

Erfindungsgemäß ist jedes der finiten Elemente jeweils einer Drehachse der Drehgelenke zuzuordnen und zwar insbesondere derart, daß jedes elastische Zentrum des finiten Elementes auf einer Drehachse des Gelenkes liegt.

Das Modell sollte so gewählt sein, daß sich jedes finite Element längs der zugeordneten Achse verschieben läßt, um hierdurch den Ort zu ermitteln, an dem die besten Korrekturergebnisse erzielt werden. Insbesondere wird es hierdurch auch möglich, daß Fehler, die von einem horizontal auskragenden Meßarm eines Ständermeßgerätes und von der Anbindung der Dreh-Schwenkeinrichtung an den Meßarm herrühren mitberücksichtigt werden können, indem das finite Element entsprechend in Richtung auf den Meßarm zu verschoben wird.

Eine weitere rechentechnische Vereinfachung ergibt sich, wenn jedes finite Element als Freiheitsgrade nur Verdrehungen um die drei Achsen des Ihm zugeordneten Koordinatensystems zuläßt.

Besonders gute Ergebnisse werden erzielt, wenn jeder Drehachse ein eigenes finites Element zugeordnet wird.

Es sei an dieser Stelle nochmals ausdrücklich erwähnt, daß das Korrekturverfahren sowohl für rastende Dreh-Schwenkeinrichtungen wie auch für kontinuierlich verdrehbare Dreh-Schwenkeinrichtungen verwendet werden kann.

Weitere Vorteile und Weiterbildungen der Erfindung ergeben sich aus der Figurenbeschreibung.

Fig. 1    zeigt eine perspektivische Darstellung der Dreh-Schwenkeinrichtung

Fig. 2    zeigt eine rein schematische Darstellung der Dreh-Schwenkeinrichtung gemäß Fig. 1

Fig. 3    zeigt die Rotation des Mittelpunktes (P) der Tastkugel (12) um ein ideales Drehgelenk (14) ohne Laufabweichungen

Fig. 4    zeigt die Rotation des Mittelpunktes (P) der Tastkugel (12) um ein reales Drehgelenk 14) mit Laufabweichungen

Fig. 5    zeigt eine schematische Darstellung der Fehler bei der Rotation des Mittelpunktes (P) der Tastkugel (12) um ein reales Drehgelenk (14) mit Laufabweichungen

Fig. 6    zeigt einen Meßaufbau, mit dem die Korrekturparameter für die Laufabweichungen des Drehgelenkes (14) bestimmt werden können

Fig. 7    7 zeigt einen Meßaufbau, mit dem die Korrekturparameter für die Laufabweichungen des Drehgelenkes (15) bestimmt werden können

Fig. 8    zeigt eine rein schematische Prinzipdarstellung der Dreh-Schwenkeinrichtung nach Fig. 1, wobei die Tastkonfiguration eine Tastkopfverlängerung (19) umfaßt und zur Berechnung der elastischen Verformung zwei finite elastische Elemente (17 und 18) eingefügt wurden

Fig. 9    zeigt eine rein schematische Prinzipdarstellung des elastischen Zentrums (K) eines finiten Elementes

Fig.10    zeigt ebenfalls eine rein schematische Prinzipdarstellung des elastischen Zentrums (K) eines finiten Elementes mit der Verschiebung des Mittelpunktes (P) der Tastkugel (12)

Fig. 11    zeigt die in Figur 1 gezeigte Dreh-Schwenkeinrichtung von vorne mit einem Sterntaster (21)

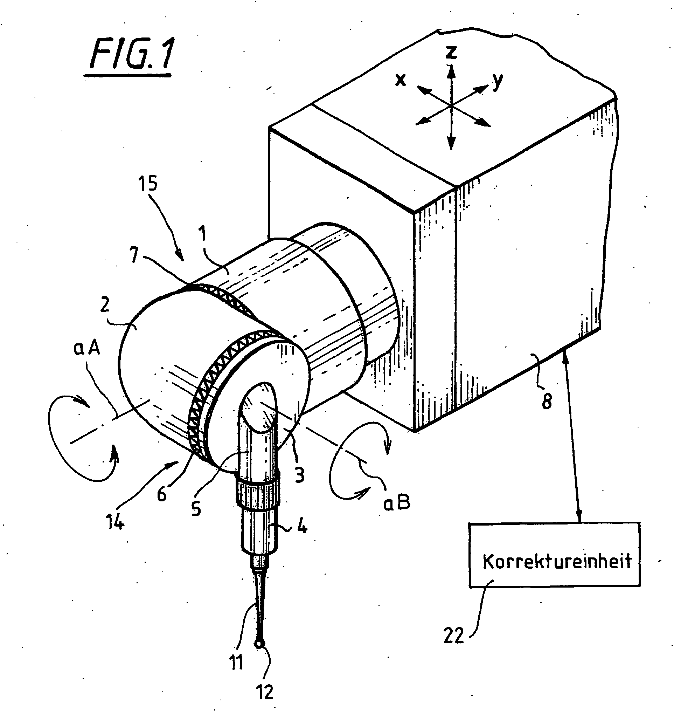

Figur 1 zeigt eine Dreh-Schwenkeinrichtung, die hier als sogenannte rastende Dreh-Schwenkeinrichtung ausgeführt ist. Die Dreh-Schwenkeinrichtung ist hierbei an einem horizontal ausgerichteten Meßarm (8) eines Ständermeßgerätes befestigt und weist zwei Drehgelenke (14,15) auf, die die Bauteile (1) und (2), sowie die Bauteile (2) und (3) drehbar miteinander verbinden, wobei die Drehgelenke (15,14) die Drehachsen ($a_A$) und ($a_B$) definieren. Zum Festrasten der eingestellten Drehwinkel weist die Dreh-Schwenkeinrichtung sogenannte Hirth-Verzahnungen (6) und (7) auf. Dies sind paarweise zusammenwirkende Zahnkränze, die ineinander greifen. Um die Drehwinkel der Drehgelenke (14,15) zu verändern, befindet sich im Inneren der Dreh-Schwenkeinrichtung ein pneumatischer Zylinder, über den das Bauteil (2) gegenüber dem Bauteil (1) sowie das Bauteil (3) gegenüber dem Bauteil (2) abgehoben werden kann. Außerdem ist für jedes der Drehgelenke ein Elektromotor vorgesehen, über den der Drehwinkel des jeweiligen Drehgelenkes (14,15) verstellt werden kann. Nachdem der gewünschte Drehwinkel erreicht ist, werden die ausgehobenen Bauteile (1) und (2) bzw. (2) und (3) wieder von der Pneumatik zusammengezogen.

In der gezeigten Darstellung ist an die Aufnahme der Dreh-Schwenkeinrichtung ein Tastkopf (4) vom schaltenden Typ angesetzt. Am Tastkopf (4) ist wiederum ein Taststift (11) mit einer Tastkugel (12) auswechselbar gehalten, wobei der Tastkopf (4), bei der Berührung eines Werkstückes mit der Tastkugel (12), ein elektrisches Signal auslöst. Natürlich kann beispeilsweise auch ein optischer Tastkopf oder ein messender Tastkopf verwendet werden. Der Tastkopf (4) ist mittels eines Adapterteils (5) an der Halteplatte (3) befestigt.

Die hierbei vom Koordinatenmeßgerät während einer Messung aufgenommenen Meßwerte werden in der hier nur rein schematisch dargestellten Korrektureinheit (22) gemäß einem mathematischen Modell korrigiert. Bei dieser besagten Korrektureinheit (22) handelt es sich üblicherweise um den Rechner des Koordinatenmeßgerätes. Natürlich kann alternativ auch ein eigens vorgesehener Mikroprozessor verwendet werden, der beispielsweise in der Steuerung des Koordinatenmeßgerätes oder sogar in der Dreh-Schwenkeinheit selber angeordnet ist.

1. Grundmodell

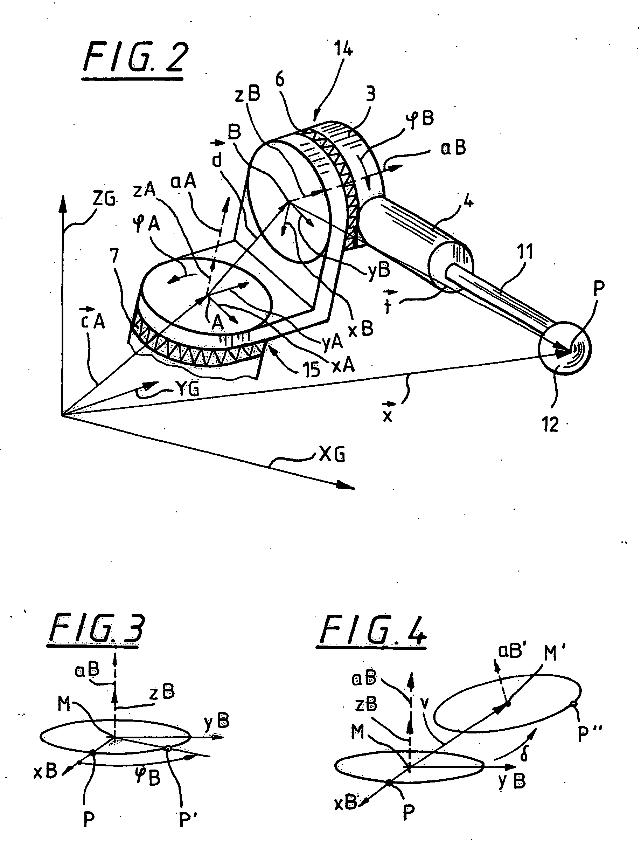

Um bei einer derartigen Dreh-Schwenkeinrichtung mit unterschiedlichen Drehwinkeln der Drehgelenke (14,15) Messungen durchführen zu können muß für jeden Drehwinkel der genaue Ortsvektor ($\vec{x}$) des Mittelpunktes (P) der Tastkugel (12) bezogen auf das Gerätekoordinatensystem ($X_G, Y_G, Z_G$) bekannt sein. Dieser Sachverhalt soll im Folgenden anhand von Figur 2 erläutert werden. Figur 2 zeigt lediglich eine rein schematische Darstellung der Dreh-Schwenkeinrichtung gemäß Figur 1, in der für die gleichen Komponenten dieselben Bezugszeichen wie in Figur 1 verwendet wurden.

Diesen Ortsvektor ($\vec{x}$) der Tastkugel (12) im Gerätekoordinatensystem ($X_G, Y_G, Z_G$) kann man als Vektorgleichung wie folgt angeben:

$$\text{Gleichung 1} \qquad \vec{x} = T_A^{-1} R_A \left( T_B^{-1} R_B \vec{t} + \vec{d} \right) + \vec{c}_A$$

Die Punkte (A) und (B) stellen die Schnittpunkte einer Geraden mit den Drehachsen ($a_A$) und ($a_B$) dar, wobei die Gerade entlang des kürzesten Abstandes der beiden Drehachsen ($a_A$) und (aB) verläuft. Der Vektor ($\vec{x}$) bedeutet hierbei den Ortsvektor des Mittelpunktes (P) der Tastkugel (12) bezogen auf das Gerätekoordinatensystem ($X_G, Y_G, Z_G$). Der Vektor ($\vec{t}$) ist der Vektor vom Punkt (B) zum Mittelpunkt (P) der Tastkugel (12). Der Vektor ($\vec{c}_A$) ist der Ortsvektor des Punktes (A) bezogen auf das Gerätekoordinatensystem ($X_G, Y_G, Z_G$). Der Vektor ($\vec{d}$) ist der Abstandsvektor des Punktes (B) vom Punkt (A). Die Rotationsmatrix ($R_A$) beschreibt die Rotation des Drehgelenkes (15) um die Drehachse ($a_A$). Die Rotationsmatrix ($R_B$) beschreibt die Rotation des Drehgelenkes (14) um die Achse ($a_B$). Die Transformationsmatrix ($T_A$) beschreibt die Transformation des Gerätekoordinatensystems ($X_G, Y_G, Z_G$) in das Gelenkkoordinatensystem ($X_A, Y_A, Z_A$) im Punkt (A). Die Transformationsmatrix ($T_B$) beschreibt die Transformation des Gelenkkoordinatensystems ($X_A, Y_A, Z_A$) im Punkt (A) in das Gelenkkoordinatensystem ($X_B, Y_B, Z_B$) im Punkt (B).

Diese Gleichung 1 entspricht hierbei der in DE 37 400 70 A1 beschriebenen Gleichung und ist lediglich etwas anders mathematisch beschrieben.

Im Fall der idealen, fehlerfreien Drehgelenke ist deren Bewegung eine reine Rotation und es gilt für die Rotationsmatrizen ($R_A$) und ($R_B$) für die Drehung um die Z-Achse des jeweiligen Gelenkkoordinatensystems ($X_A, Y_A, Z_A$ bzw. $X_B, Y_B, Z_B$).

$$\text{Gleichung 2} \qquad R_A = R_B = \begin{pmatrix} \cos\varphi & -\sin\varphi & 0 \\ \sin\varphi & \cos\varphi & 0 \\ 0 & 0 & 1 \end{pmatrix}$$

In dieser Gleichung 2 bezeichnet ($\varphi$) hierbei den Drehwinkel um das jeweilige Drehgelenk (14,15). Für die Rotationsmatrix ($R_A$) ist es der Drehwinkel ($\varphi_A$) des Drehgelenkes (15), für die Rotationsmatrix ($R_B$) ist es der Drehwinkel ($\varphi_B$) des Drehgelenkes (14)

Alle weiteren Vektoren und Matrizen sind auch im Fall idealer Drehgelenke unbekannt und müssen experimentell bestimmt werden, und zwar 9 Komponenten von Vektoren sowie 6 Raumwinkel der Transformationsmatrizen. Dazu kommen als weitere Unbekannte die Nullwinkel der beiden Winkelmeßsysteme. Demgemäß sind für die Kalibrierung der Dreh-Schwenkeinheit Messungen für mindestens 17 unabhängige Bedingungsgleichungen durchzuführen. Das ist auch dann noch der Fall, wenn die Korrektur der einzelnen Drehgelenke bekannt ist.

2. Kinematische Korrektur

In nullter Näherung besitzt ein Drehgelenk nur einen einzigen kinematischen Freiheitsgrad, der mit der Rotationsmatrix nach Gleichung 2 als reine Rotation um die Drehachse beschreibbar ist, wie dies in Figur 3 rein beispielhaft für die Rotation um die Achse ($a_B$) gezeigt ist. Wie hier zu sehen ist, wird in diesem Falle der Tastkugelmittelpunkt (P) bei Rotation um einen Winkel ($\varphi_B$) um die Drehachse ($a_B$) auf einen Punkt (P') so abgebildet, daß beide auf einem Kreis liegen, dessen Ebene lotrecht auf die betreffende Drehachse steht und dessen Mittelpunkt (M) auf der Drehachse ($a_B$)

liegt.

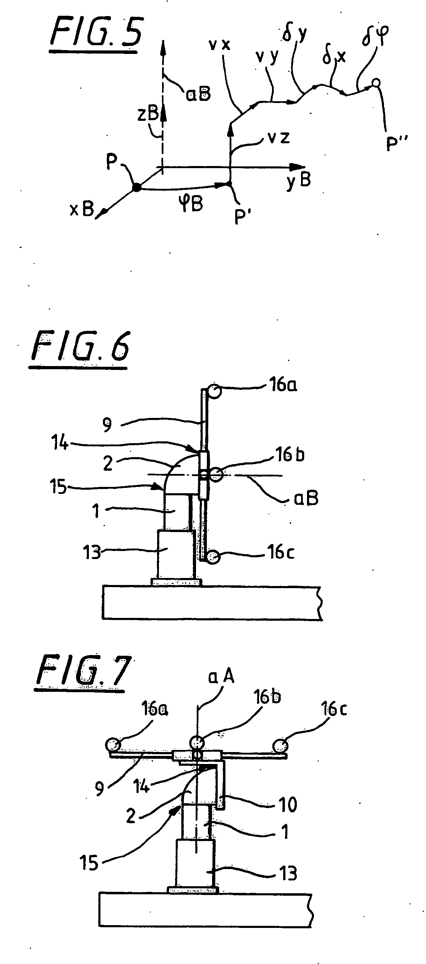

Ein reales Drehgelenk weist demgegenüber bedingt durch die Fertigungsungenauigkeiten Bewegungen in allen sechs Freiheitsgraden auf, wie dies gut anhand der rein schematischen Figur 4 gesehen werden kann. Wie hieraus zu sehen, wird der Tastkugelmittelpunkt (P) bei Rotation um die Drehachse ($a_B$) diesmal auf einem Punkt (P") abgebildet, der nicht auf dem besagten Kreis um die Drehachse ($a_B$) liegt. Die sechs Freiheitsgrade in denen die Bewegungen stattfinden können entsprechen zugleich den sechs Fehlerkomponenten, die zu dem theoretischen Punkt (P') dazugerechnet werden müssen, um zum tatsächlichen Punkt (P") zu gelangen, wie dies Figur 5 zeigt. Diese Fehlerkomponenten sind:

- Winkelpositionsabweichungen ($\delta\varphi = \delta_z$) des Rastsystems oder Winkelmeßsystems
- radiale Laufabweichungen ($v_x$, $v_y$) in x und y-Richtung,
- Axialverschiebungen $v_z$
- Kippungen $\delta_x$, $\delta_y$ um die x- und y-Achse als Taumelfehler.

Anstelle der Rotationsbewegung vollführt damit das geführte Teil eine allgemeine Starrkörperbewegung im Raum, die aus dem Verschiebungsvektor ($\vec{v}$) und dem Vektor ($\vec{\delta}$) der räumlichen Drehungen besteht.

Dementsprechend setzt sich bezogen auf die Dreh-Schwenkeinrichtung gemäß Figur 2 die räumliche Verschiebung des Mittelpunktes (P) der Tastkugel (12) bei einer Drehung um eines der beiden Drehgelenke (14 oder 15) von (P) nach (P") aus sieben Komponenten zusammen, und zwar der nominellen Rotation um den Drehwinkel ($\varphi_A$ oder $\varphi_B$) und den jeweils zu der betreffenden Drehung dazugehörigen sechs Fehlerkomponenten, d.h. je drei Verschiebungen ($V_x, V_y, V_z$) und drei Drehungen ($\delta x, \delta y, \delta\varphi$).

Unter den obigen Betrachtungen kann das oben genannte Grundmodell also wie folgt erweitert werden:

$$\text{Gleichung 3} \qquad \bar{x} = T_A^{-1} R_A \left[ D_A \left( T_B^{-1} R_B \left( D_B \bar{t} + \vec{v}_B \right) + \vec{d} \right) + \vec{v}_A \right] + \bar{c}_A$$

Die gegenüber dem Grundmodell nach Gleichung 1 erweiterten Komponenten haben hierbei nachfolgende Bedeutung. Der Vektor ($\vec{v}_A$) bedeutet hierbei den Verschiebefehler, der durch das Drehgelenk (15) entsteht. Die Drehmatrix ($D_A$) repräsentiert den Drehfehler der um das Drehgelenk (15) entsteht. Der Vektor ($\vec{v}_B$) bedeutet den Verschiebefehler, der durch das Drehgelenk (14) entsteht. Die Drehmatrix ($D_B$) repräsentiert den Drehfehler der um das Drehgelenk (14) entsteht.

Die Vektoren ($\vec{v}_A$) und ($\vec{v}_B$), die sich jeweils aus den Verschiebefehlern in x, y und z-Richtung zusammensetzen definieren sich folglich wie folgt:

$$\text{Gleichung 4} \qquad \bar{v}_A = \bar{v}_B = \begin{pmatrix} v_x \\ v_y \\ v_z \end{pmatrix}$$

Die räumlichen Drehmatrizen ($D_A$) und ($D_B$), die sich jeweils aus den Einzeldrehungen $D_x$, $D_y$ und $D_z$ um die Koordinatenachsen x,y und z mit den Eulerschen Winkeln $\delta_z$, $\delta_y$, $\delta_x$

zusammensetzen ergeben sich folglich wie folgt:

$$\text{Gleichung 5} \quad D_A = D_B = \begin{pmatrix} 1 & 0 & 0 \\ 0 & \cos\delta_x & \cos\delta_x \\ 0 & -\cos\delta_x & \cos\delta_x \end{pmatrix} \begin{pmatrix} \cos\delta_y & 0 & -\cos\delta_y \\ 0 & 1 & 0 \\ \sin\delta_y & 0 & \cos\delta_y \end{pmatrix} \begin{pmatrix} \cos\delta_z & \sin\delta_z & 0 \\ -\sin\delta_z & \cos\delta_z & 0 \\ 0 & 0 & 1 \end{pmatrix}$$

Die Ermittlung der Vektors ($\vec{v}_B$) für die Verschiebefehler beim Drehgelenk (14) sowie der Drehmatrix ($D_B$) für die Drehfehler des Drehgelenkes (14) kann relativ einfach erfolgen, wie dies im Zusammenhang mit Figur 6 erläutert wird. Dazu wird die Dreh-Schwenkeinrichtung auf einem hochgenauen Koordinatenmeßgerät aufgespannt und an der Dreh-Schwenkeinrichtung ein Kugelprüfkörper (9) angebracht, der wenigstens drei Kugeln (16a, 16b, 16c) aufweist.

Nunmehr wird das Drehgelenk (14) in jeden seiner möglichen Drehwinkel gebracht und die jeweilige Lage der Kugeln (16a, 16b, 16c) mit einem Zentriertaster, der ähnlich einem Fingerhut aufgebaut ist, vermessen. Es hat sich hierbei gezeigt, daß die Fehler erst dann ausreichend klein sind, wenn mit einer ausreichenden Meßkraft gemessen wird. Dies führt jedoch zu einer relativ großen Verbiegung des Kugelprüfkörpers (9). Deshalb kann besonders vorteilhaft die exakte Lage der Kugeln (16a, 16b, 16c) bestimmt werden, indem mit zwei unterschiedlichen Meßkräften gemessen wird und dann auf die Lage extrapoliert wird, die die Kugeln bei der Meßkraft 0 N aufweisen. Für jeden Drehwinkel des Drehgelenkes (14) wird dann aus der Lage der Kugeln (16a, 16b, 16c) eine Ebene aufgespannt, sowie der Flächenschwerpunkt aus den gemessenen Kugelpositionen bestimmt. Der Vektor ($\vec{v}_B$) für die Verschiebefehler ergibt sich dann als Vektor vom Schwerpunkt im Referenzdrehwinkel der Dreh-Schwenkeinrichtung zum Schwerpunkt im aktuellen Drehwinkel. Die Fehlerwinkel für die Drehmatrix ($D_B$) ergeben sich aus den Verdrehungen der berechneten Ebene im Referenzdrehwinkel zur berechneten Ebene in der aktuellen Drehstellung.

Vollkommen analog wird auch der Vektor ($\vec{v}_A$) für die Verschiebefehler beim Drehgelenk (15) sowie der Drehmatrix ($D_A$) für die Drehfehler des Drehgelenkes (15) ermittelt, wobei dann der Kugelprüfkörper (9) über ein Winkelstück (10) an der Dreh-Schwenkeinrichtung befestigt wird.

3. Korrektur elastischer Biegefehler

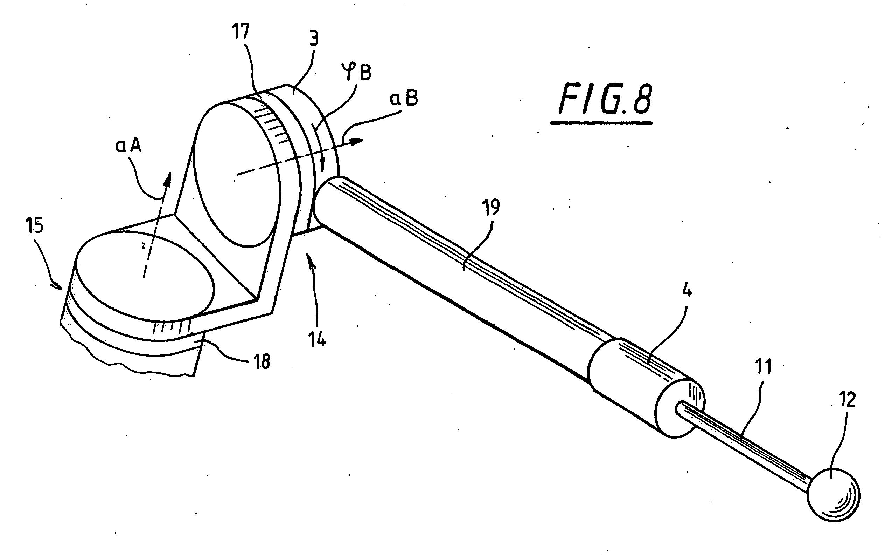

Unter realen Bedingungen kommt es, bedingt durch die Gewichtskräfte insbesondere der Tastkonfiguration, also des Tastkopfes (4), des Taststiftes (11) sowie insbesondere von Tastkopfverlängerungen (19) zu Verformungen sowohl der Dreh-Schwenkeinrichtung, wie auch der Tastkonfiguration selber (siehe Fig. 8).

Für die Berechnung dieser elastischen Verformung werden erfindungsgemäß finite elastische Elemente eingeführt, mit denen sich die Verformung elastischer Systeme unter äußerer statischer Belastung beschreiben läßt. Hierduch lassen sich auf dieser Grundlage überschaubare analytische Modellgleichungen für die Korrektur der Verformung ableiten, deren Koeffizienten sich mittels Bestfit-Rechnungen aus einer Anzahl von Stellungen sowie Verformungs- und Belastungszuständen bestimmen lassen. Das Ersatzmodell soll hierbei anhand von Figuren 8 bis 10 erläutert werden. Wie aus der rein schematischen Prinzipskizze gemäß Figur 8 ersehen werden kann, sind die finiten Elemente (17) und (18) hier in dieser besonders vorteilhaften Ausgestaltung an den Stellen angesetzt, an denen die drehbar miteinander verbundenen Bauteile (1) und (2) oder (2) und (3) aneinanderstoßen, also an der Stelle, an der die Hirth-Verzahnungen (6,7) sitzen (vgl. Figuren 1 und 2). Diese finiten Elemente (17,18) können vereinfacht als Gummischeiben vorgestellt werden, die die Teile (1) und (2) oder (2) und (3) elastisch miteinander verbinden.

Das Modell geht hierbei von der Annahme aus, daß sich die Verformung als räumliche Verschiebung und Drehung zwischen den gelenkig miteinander verbundenen Bauteilen (1) und (2) bezüglich des Drehgelenkes (15) und den Bauteilen (2) und (3) bezüglich des Drehgelenkes (14) beschreiben läßt, während die anderen Komponenten, wie die Bauteile (1), (2) und (3) der Dreh-Schwenkeinrichtung, der Taststift (11), der Tastkopf (4) und die Tastkopfverlängerung (19) als vollkommen starr angenommen werden. Der Gesamtfehler kann dann aus einer Überlagerung der Korrekturen des starren Modells, wie oben in Gleichung 1 oder der Gleichung 3 beschrieben und der Korrektur der elastischen Biegefehler, wie hier beschrieben, berechnet werden. Beschreibt man den Verformungskorrekturvektor, um den sich das Gelenk (15) verformt als ($\vec{u}_A$) und den Verformungskorrekturvektor, um den sich das Gelenk (14) verformt als ($\vec{v}_B$), so ergibt bei Kombination mit Gleichung 3 folgende Gleichung:

$$\text{Gleichung 6} \qquad \bar{x} = T_A^{-1} R_A \left[ D_A \left( T_B^{-1} R_B \left( D_B \bar{t} + \bar{v}_B \right) + \bar{d} \right) + \bar{v}_A \right] + \bar{c}_A + \bar{u}_A + \bar{u}_B$$

Es versteht sich, daß Gleichung 6 besonders vorteilhaft ist, weil neben der Verformung gleichzeitig auch Winkelabweichungen, Radialbewegungen, Axialverschiebungen und Taumelbewegungen der Drehgelenke (14) und (15) korrigiert werden, wie oben ausgeführt. Natürlich können die Verformungskorrekturvektoren ($\vec{u}_A$) und ($\vec{u}_B$) genauso gut mit Gleichung 1 kombiniert werden, beispielsweise dann, wenn eine kontinuierlich verdrehbare Dreh-Schwenkeinheit verwendet wird, deren Drehgelenke nur sehr geringe Fehler der bezeichneten Art haben. Gleichfalls können die Verformungskorrekturvektoren ($\vec{u}_A$) und ($\vec{u}_B$) auch völlig separat berechnet werden.

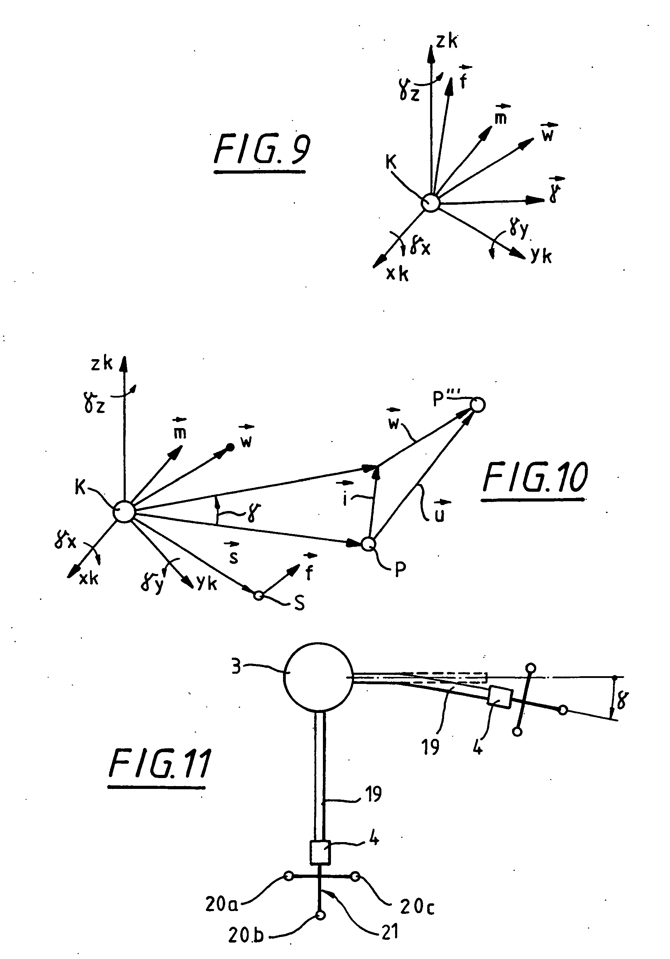

Damit läßt sich, wie Figur 9 dies zeigt, ein finites Element mathematisch so behandeln, als ob im Zentrum (K) eines solchen finiten Elementes (17) oder (18) nur ein Kraftvektor ($\vec{f}$) und ein Momentenvektor ($\vec{m}$) angreifen würde, wobei der Kraftvektor ($\vec{f}$) und der Momentenvektor ($\vec{m}$) durch die äußere Belastung, also die Gewichtskräfte der Tastkonfiguration und ggf. durch die Meßkräfte erzeugt werden. Dieses Modell setzt voraus, daß das elastische Zentrum (K) des finiten Elementes mit seiner Lage und seiner Orientierung im Raum sowie mit seinen elastischen Parametern die elastischen Eigenschaften der verformten Bauteile enthält. Außerdem muß die Verformung linear abhängig von den Belastungen sein und proportional zu den im elastischen Zentrum (K) wirkenden Kräften und Momenten. Es muß weiterhin das Superpositionsprinzip gelten. Das finite Element reagiert auf den Kraftvektor ($\vec{f}$) und den Momentenvektor

($\overrightarrow{m}$) mit einem Verformungskorrekturvektor ($\overrightarrow{u}$) der sich aus einem Translationsvektor ($\overrightarrow{w}$) und einem Rotationsvektor ($\overrightarrow{\gamma}$) zusammensetzt. Der Verformungskorrekturvektor ($\overrightarrow{u}$) kann wie folgt bestimmt werden:

$$\text{Gleichung 7} \qquad \bar{u} = \begin{pmatrix} \bar{w} \\ \bar{\gamma} \end{pmatrix} = N * \bar{b} = \begin{pmatrix} N_{11} & N_{12} \\ N_{21} & N_{22} \end{pmatrix} \begin{pmatrix} \bar{f} \\ \bar{m} \end{pmatrix}$$

Wobei (N) die Nachgiebigkeitsmatrix ist, die als Hypermatrix die Nachgiebigkeitsmatrizen ($N_{11}$) bis ($N_{22}$) enthält. Übersichtlich geschrieben bedeutet dies für den Translationsvektor ($\overrightarrow{w}$) und den Rotationsvektor ($\overrightarrow{\gamma}$) folgendes:

$$\text{Gleichung 8} \qquad \bar{w} = N_{11}\bar{f} + N_{12}\bar{m}$$

$$\text{Gleichung 9} \qquad \bar{\gamma} = N_{21}\bar{f} + N_{22}\bar{m}$$

In dieser Gleichung bedeuten die Nachgiebigkeitsmatrizen ($N_{11}$) bis ($N_{22}$) folgendes:

$N_{11}$= Translation infolge des im elastischen Zentrum (K) wirkenden Kraftvektors ($\overrightarrow{f}$)
$N_{12}$= Translation infolge des im elastischen Zentrum (K) wirkenden Momentenvektors ($\overrightarrow{m}$)
$N_{21}$= Rotation infolge des im elastischen Zentrum (K) wirkenden Kraftvektors ($\overrightarrow{f}$)
$N_{22}$= Rotation infolge des im elastischen Zentrum (K) wirkenden Momentenvektors ($\overrightarrow{m}$)

Die Nachgiebigkeitsmatrix wird dabei in den Koordinaten ($x_K$, $y_K$, $z_K$) des elastischen Zentrums (K) definiert und muß in das aktuelle Gerätekoordinatensystem ($X_G$, $Y_G$, $Z_G$) transformiert werden. Am realen System wirkt, wie dies an der rein schematischen Prinzipskizze gemäß Figur 10 ersichtlich ist, als äußere Belastung das Eigengewicht der Tastkonfiguration, wie beispielsweise des Tastkopfes (4) nach der allseits bekannten Formel $\overrightarrow{f}=m*\overrightarrow{g}$ im Schwerpunkt (S). Das Eigengewicht bewirkt demzufolge den Momentenvektor ($\overrightarrow{m}$) aus dem Kraftvektor ($\overrightarrow{f}$) und dem Abstandsvektor ($\overrightarrow{s}$) zwischen dem elastischen Zentrum (K) und dem Schwerpunkt (S) nach der

$$\text{Gleichung 10} \qquad \bar{m} = \bar{f} \times \bar{s}$$

Der Verformungskorrekturvektor ($\overrightarrow{u}$) um den der Mittelpunkt (P) der Tastkugel (12) infolge der Verformung verschoben wird ergibt sich dann aus der Überlagerung von räumlicher Verschiebung gemäß dem Translationsvektor ($\overrightarrow{w}$) und der Drehung gemäß dem Rotationsvektor ($\overrightarrow{\gamma}$) wie folgt:

$$\text{Gleichung 11} \qquad \bar{u} = \bar{w} + \bar{\gamma} \times \bar{p}$$
$$= N_{11}\bar{f} + N_{12}(\bar{f} \times \bar{s}) + \left(N_{21}\bar{f} + N_{22}(\bar{f} \times \bar{s})\right) \times \bar{p}$$

wobei der Vektor ($\overrightarrow{p}$) der Abstandsvektor zwischen dem elastischen Zentrum (K) und dem Mittelpunkt (P) der Tastkugel (12) ist. Wie sich dies zusammensetzt wird an Figur 10 deutlich. Hierin ist der Vektor ($\overrightarrow{\gamma} \times \overrightarrow{p}$) als Vektor ($\overrightarrow{l}$) dargestellt.
Wählt man hierbei das Koordinatensystem so, daß der Kraftvektor ($\overrightarrow{f}$) im elastischen Zentrum (K) alleine eine Translation verursacht und der Momentenvektor ($\overrightarrow{m}$) im elastischen Zentrum (K) alleine eine Rotation verursacht, so können die Untermatrizen ($N_{12}$) und ($N_{21}$) durch Nullmatrizen ersetzt werden. Bei großen Längen des Abstandsvektors ($\overrightarrow{p}$) und damit auch des Abstandsvektors ($\overrightarrow{s}$) und hoher translatorischer Steifigkeit des elastischen Ersatzelementes kann der Translationsvektor ($\overrightarrow{w}$) und demzufolge auch die Nachgiebigkeitsmatrix ($N_{11}$) vernachlässigt werden. Bei entsprechender Wahl des Koordinatensystems ($X_K$, $Y_K$, $Z_K$) der finiten elastischen Elemente werden die Koeffizienten außerhalb der Hauptdiagonalen der Nachgiebigkeitsmatrizen ($N_{ij}$) Null. Mit diesen Vereinfachungen gilt nunmehr folgende Gleichung:

$$\text{Gleichung 12} \qquad \bar{\mathbf{u}} \approx \bar{\boldsymbol{\gamma}} \times \bar{\mathbf{p}} = \left(\mathbf{N}_{22}\left(\bar{\mathbf{f}} \times \bar{\mathbf{s}}\right)\right) \times \bar{\mathbf{p}}$$

Die ursprünglich 36 Koeffizienten der Hypermatrix (N) sind damit auf drei rotatorische Nachgiebigkeitskoeffizienten reduziert worden und die verbleibende Matrix lautet dann:

$$\text{Gleichung 13} \qquad \mathbf{N}_{22} = \mathbf{N}_{\Phi} = \begin{pmatrix} \Phi_1 & 0 & 0 \\ 0 & \Phi_2 & 0 \\ 0 & 0 & \Phi_3 \end{pmatrix}$$

In dieser Matrix $N_{22}$ bedeuten $(\Phi_1,\Phi_2)$ die Nachgiebigkeit für die Kippung um die x- und y-Achse $(X_K, Y_K)$ des Koordinatensystems der finiten Elemente und $(\Phi_3)$ die Rotation um die z-Achse $(Z_K)$.

Die Verformungskorrekturverktoren $(\vec{u}_A)$ und $(\vec{u}_B)$ werden also gemäß Gleichung 12 separat für jedes der finiten Elemente (17,18) berechnet. Wie bereits eingangs erwähnt ist die Wahl der Anzahl der finiten Elemente (17,18) sowie deren Lage hier zwar bezogen auf die hier gezeigte Dreh-Schwenkeinrichtung besonders vorteilhaft. Soll beispielsweise die elastische Verformung des horizontal ausgerichteten Meßarms eines Ständermeßgerätes und/oder der Anbindung der Dreh-Schwenkeinrichtung an den Meßarm erfaßt werden, so sollte das finite Element (18) weiter in Richtung auf den Meßarm zu verschoben werden.

Um bei einer neu an der Dreh-Schwenkeinrichtung aufgenommenen Tastkonfiguration die Parameter der Nachgiebigkeitsmatrix $(N_{22})$ sowohl für das Gelenk (14) wie auch für das Gelenk (15) zu ermitteln wie auch den Vektor $(\vec{t})$ vom Mittelpunkt (P) der Tastkugel (12) zum Punkt (B) zu ermitteln, müssen wenigstens 8 Kalibrierungen in unterschiedlichen Drehstellungen der Drehgelenke (14) und (15) am Kalibriernormal des Koordinatenmeßgerätes vorgenommen werden. Häufig müssen jedoch im Meßalltag Tastkonfigurationen, beispielsweise der Taststift oder die Tastkopfverlängerung ausgetauscht werden. Wird die selbe Tastkonfiguration zu einem späteren Zeitpunkt wieder verwendet, so müssen o.g. Parameter erneut bestimmt werden, was relativ zeitaufwendig ist. Geht man davon aus, daß bei einem erneuten Einwechseln ein und derselben Tastkonfiguration die elastischen Eigenschaften der Tastkonfiguration und damit die Parameter der Nachgiebigkeitsmatrix $(N_{22})$ nahezu unverändert bleiben, so reicht es aus in diesem Falle nur den Vektor $(\vec{t})$ zu bestimmen, sodaß prinzipiell nur eine einzige Kalibrierung am Kalibriernormal ausreichen würde.

Besonders vorteilhaft kann dieses Verfahren bei der Kalibrierung von Sterntaststiften eingesetzt werden. Figur 11 zeigt diesbezüglich eine Prinzipskizze, bei der von der aus Figur 1 gezeigten Dreh-Schwenkeinheit lediglich das Bauteil (3) zu sehen ist, an das sich eine Tastkopfverlängerung (19) mit Tastkopf (4) und einem Sterntaststift (21) anschließt. Geht man davon aus, daß bezüglich aller Tastkugeln (20a, 20b, 20c) des Sterntaststiftes (21) näherungsweise dieselben Biegeparameter vorliegen, so reicht es aus nur für eine der Tastkugeln (20a, 20b, 20c) die Parameter der Nachgiebigkeitsmatrix $(N_{22})$ zu bestimmen. Für die anderen Tastkugeln (20a, 20b, 20c) braucht dann nur noch der Vektor $(\vec{t})$ bestimmt zu werden.

**Patentansprüche**

1. Verfahren zur Korrektur einer Dreh-Srhwenkeinrichtung für Tastköpfe (4) von Koordinatenmeßgeräten, mit wenigstens zwei Drehgelenken (14,15) zur winkelmäßigen Ausrichtung der Tastköpfe, wobei zur Korrektur der Dreh-Schwenkeinrichtung eine Korrektureinheit (22) zugeordnet ist, die bei der Messung die Fehler aufgrund der elastischen Verformung der Dreh-Schwenkeinrichtung korrigiert **dadurch gekennzeichnet, dass** zur Korrektur der Verformung in der Korrektureinheit (22) ein mathematisches Modell verwendet wird, das wenigstens zwei finite Elemente (17,18) umfasst, wobei bei dem in der Korrektureinheit (22) verwendeten mathematischen Modell jedes der finiten Elemente jeweils einer Drehachse $(a_A, a_B)$ eines der Drehgelenke (14,15) zugeordnet ist.

2. Verfahren nach Anspruch 1, **dadurch gekennzeichnet, daß** bei dem in der Korrektureinheit (22) verwendeten mathematischen Modell das elastische Zentrum (K) des finiten Elementes (17,18) auf der Drehachse $(a_A, a_B)$ des Gelenkes liegt.

3. Verfahren nach Anspruch 2, **dadurch gekennzeichnet, daß** bei dem in der Korrektureinheit (22) verwendeten mathematischen Modell sich das finite Element längs der Drehachse verschieben läßt.

4. Verfahren nach einem der Ansprüche 1 bis 3, **dadurch gekennzeichnet, daß** bei dem in der Korrektureinheit (22) verwendeten mathematischen Modell das finite Element als Freiheitsgrade nur die Drehung um die drei Achsen des Ihm zugeordneten Koordinatensystems ($x_K$, $y_K$, $z_K$) zuläßt.

5. Verfahren nach einem der Ansprüche 1 bis 4, **dadurch gekennzeichnet, daß** bei dem in der Korrektureinheit (22) verwendeten mathematischen Modell Fehler, die vom Meßarm (8) und/oder von der Anbindung der Dreh-Schwenkeinrichtung an den Meßarm herrühren mitberücksichtigt werden.

6. Verfahren nach einem der Ansprüche 1 bis 5, **dadurch gekennzeichnet, daß** bei dem in der Korrektureinheit (22) verwendeten mathematischen Modell der Verformungskorrekturvektor ($\vec{u}$), mit dem die elastische Verformung korrigiert wird, unter anderem folgende Teilkomponente enthält:

$$\vec{u} = \left( N_{22} \left( \vec{f} \times \vec{s} \right) \right) \times \vec{p}$$

wobei
$\vec{f}$: der im Schwerpunkt (S) angreifende Gewichtskraftvektor ist
$\vec{s}$: der Abstandsvektor zwischen dem Schwerpunkt (S) und dem elastischen Zentrum (K) des finiten Elementes
$N_{22}$: die Nachgiebigkeitsmatrix fiir die Rotation infolge des im elastische Zentrums
(K) des finiten Elementes wirkenden Momentenvektors ($\vec{m} = \vec{f} \times \vec{s}$)
$\vec{p}$: der Abstandsvektor zwischen dem elastischen Zentrum (K) des finiten Elementes und dem Tastkugelmittelpunkt
(P).

7. Verfahren nach einem der Ansprüche 1 bis 6, **dadurch gekennzeichnet, daß** die Korrektureinheit (22) bei der Kalibrierung einer Tastkonfiguration die Verformungsparameter ($N_{22}$) einer bereits vorhergehenden Kalibrierung verwendet.

8. Verfahren nach einem der Ansprüche 1 bis 7, **dadurch gekennzeichnet, daß** das mathematische Modell zur Korrektur der elastischen Verformung gemeinsam mit einem starren Modell der Dreh-Schwenkeinrichtung überlagert wird.

9. Verfahren nach einem der Ansprüche 1 bis 8, **dadurch gekennzeichnet, dass** genau zwei Drehgelenke (14,15) zur winkelmäßigen Ausrichtung der Tastköpfe vorgesehen sind und dass bei dem in der Korrektureinheit (22) verwendeten mathematischen Modell genau zwei finite Elemente (17,18) verwendet werden.

**Claims**

1. Method for correcting a rotating and pivoting device for probe heads (4) of coordinate measuring machines having at least two rotary joints (14, 15) for annularly aligning the probe heads, there being assigned to the rotating and pivoting device for the purpose of correction a correction unit (22) which corrects the errors during measurement on the basis of the elastic deformation of the rotating and pivoting device, **characterized in that**, in order to correct the deformation use is made in the correction unit (22) of a mathematical model which comprises at least two finite elements (17, 18), each of the finite elements being respectively assigned to a rotation axis ($a_A$, $a_B$) of one of the rotary joints (14, 15) in the case of the mathematical model used in the correction unit (22).

2. Method according to Claim 1, **characterized in that** the elastic centre (K) of the finite element (17, 18) lies on the rotation axis ($a_A$, $a_B$) of the joint in the case of the mathematical model used in the correction unit (22).

3. Method according to Claim 2, **characterized in that** the finite element can be displaced along the rotation axis in the case of the mathematical model used in the correction unit (22).

4. Method according to one of Claims 1 to 3, **characterized in that** the finite element permits as degrees of freedom only the rotation about the three axes of the coordinate system ($x_K$, $y_K$, $z_K$) assigned to it in the case of the mathematical model used in the correction unit (22).

5. Method according to one of Claims 1 to 4, **characterized in that** errors arising from the measuring arm (8) and/or from the joining of the rotating and pivoting device to the measuring arm are also taken into account in the case of the mathematical model used in the correction unit (22).

**6.** Method according to one of Claims 1 to 5, **characterized in that** the deformation correction vector ($\overline{\mathbf{u}}$) with the aid of which the elastic deformation is corrected includes, inter alia, the following subcomponents in the case of the mathematical model used in the correction unit (22):

$$\overline{\mathbf{u}} \ = \ \left(\mathbf{N}_{22}\left(\overline{\mathbf{f}} \ \times \ \overline{\mathbf{s}}\right)\right) \times \ \overline{\mathbf{p}} \ ,$$

in which
$\overline{\mathbf{f}}$ is the weight force vector acting at the centroid (S),
$\overline{\mathbf{s}}$ is the distance vector between the centroid (S) and the elastic centre (K) of the finite element,
$\mathbf{N}_{22}$ is the compliance matrix for the rotation as a consequence of the torque vector ($\overline{\mathbf{m}} = \overline{\mathbf{f}} \times \overline{\mathbf{s}}$) acting at the elastic centre (K) of the finite element, and
$\overline{\mathbf{p}}$ is the distance vector between the elastic centre (K) of the finite element and the probe sphere centre (P).

**7.** Method according to one of Claims 1 to 6, **characterized in that** the correction unit (22) uses the deformation parameters ($N_{22}$) of an already preceding calibration when calibrating a probe configuration.

**8.** Method according to one of Claims 1 to 7, **characterized in that** a rigid model of the rotating and pivoting device is jointly superimposed on the mathematical model for correcting the elastic deformation.

**9.** Method according to one of Claims 1 to 8, **characterized in that** exactly two rotary joints (14, 15) are provided for angularly aligning the probe head, and **in that** exactly two finite elements (17, 18) are used in the case of the mathematical model used in the correction unit (22).

**Revendications**

**1.** Procédé pour corriger un dispositif rotatif/basculant pour têtes de palpage (4) d'appareils de mesure de coordonnées, comprenant au moins deux articulations rotatives (14, 15) pour l'orientation angulaire des têtes de palpage, une unité de correction (22) étant associée pour corriger le dispositif rotatif/basculant, laquelle corrige lors de la mesure les erreurs résultant de la déformation élastique du dispositif rotatif/basculant, **caractérisé en ce que** pour corriger la déformation, un modèle mathématique est utilisé dans l'unité de correction (22), lequel comprend au moins deux éléments finis (17, 18), chaque élément fini étant à chaque fois associé à un axe de rotation ($a_A$, $a_B$) de l'une des articulations rotatives (14, 15) avec le modèle mathématique utilisé dans l'unité de correction (22).

**2.** Procédé selon la revendication 1, **caractérisé en ce qu'**avec le modèle mathématique utilisé dans l'unité de correction (22), le centre élastique (K) de l'élément fini (17, 18) se trouve sur l'axe de rotation ($a_A$, $a_B$) de l'articulation.

**3.** Procédé selon la revendication 2, **caractérisé en ce qu'**avec le modèle mathématique utilisé dans l'unité de correction (22), l'élément fini peut être déplacé le long de l'axe de rotation.

**4.** Procédé selon l'une des revendications 1 à 3, **caractérisé en ce qu'**avec le modèle mathématique utilisé dans l'unité de correction (22), l'élément fini n'autorise comme degré de liberté que la rotation autour des trois axes du système de coordonnées ($x_K$, $y_K$, $z_K$) qui lui est associé.

**5.** Procédé selon l'une des revendications 1 à 4, **caractérisé en ce qu'**avec le modèle mathématique utilisé dans l'unité de correction (22), les erreurs qui proviennent du bras de mesure (8) et/ou de la liaison du dispositif rotatif/basculant au bras de mesure sont également prises en compte.

**6.** Procédé selon l'une des revendications 1 à 5, **caractérisé en ce qu'**avec le modèle mathématique utilisé dans l'unité de correction (22), le vecteur de correction de la déformation ($\overline{u}$) avec lequel est corrigée la déformation élastique contient entre autres les composantes partielles suivantes :

$$\bar{u} = \left(N_{22}(\bar{f} \times \bar{s})\right) \times \bar{p}$$

où

$\bar{f}$ désigne le vecteur de poids qui intervient au centre de gravité (S)

$\bar{s}$ désigne le vecteur d'écart entre le centre de gravité (S) et le centre élastique (K) de l'élément fini

$N_{22}$ désigne la matrice de flexibilité pour la rotation résultant du vecteur de moment ($\bar{m} = \bar{f} \times \bar{s}$) qui agit au centre élastique (K) de l'élément fini

$\bar{p}$ désigne le vecteur d'écart entre le centre élastique (K) de l'élément fini et le point central de la bille de palpage (P).

7. Procédé selon l'une des revendications 1 à 6, **caractérisé en ce que** l'unité de correction (22) utilise lors du calibrage d'une configuration de palpage les paramètres de déformation ($N_{22}$) d'un calibrage déjà effectué précédemment.

8. Procédé selon l'une des revendications 1 à 7, **caractérisé en ce que** le modèle mathématique pour la correction de la déformation élastique est superposé avec un modèle rigide du dispositif rotatif/basculant.

9. Procédé selon l'une des revendications 1 à 8, **caractérisé en ce qu'**il existe exactement deux articulations rotatives (14, 15) pour l'orientation angulaire des têtes de palpage et que le modèle mathématique utilisé dans l'unité de correction (22) emploie exactement deux éléments finis (17, 18).

## FIG.1

Korrektureinheit

_FIG.2_

_FIG.3_

_FIG.4_

_FIG.5_

_FIG.6_

_FIG.7_

EP 1 126 237 B1

# FIG.8

FIG.9

FIG.10

FIG.11

**EP 1 126 237 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3740070 A1
- US 4888877 A
- DE 4001433 A1
- US 5138563 A
- EP 0759534 A2